# FASCICULE DE BREVET EUROPEEN

(11) **EP 2 409 760 B1**
(45) Date de publication et mention de la délivrance du brevet: **23.01.2019**
(21) Numéro de dépôt: 11174915.6
(22) Date de dépôt: 21.07.2011
(51) Int. Cl.: B01J 23/745, B01J 29/68, B01J 35/04, B01D 53/94, F01N 3/28, F01N 3/035, F01N 3/20

(54) **Dispositif de traitement des gaz comprenant une zéolithe de type ferriérite/fer**
Vorrichtung zur Behandlung von Gasen, die Ferrierit-Eisen Zeolit als Katalysator enthält
Gas-treatment device including such a composition comprising a ferrierite/iron-type zeolite

(30) Priorité: 22.07.2010 FR 1055989
(43) Date de publication de la demande: 25.01.2012
(73) Titulaire: PSA Automobiles SA, 78300 Poissy (FR); IRMA, 56274 Ploemeur Cedex (FR)
(72) Inventeur: Blanchard, Gilbert, 60330 LAGNY-LE-SEC (FR); Hamon, Christian, 44600 SAINT-NAZAIRE (FR)
(74) Mandataire: Ménès, Catherine

(56) Documents cités:
- EP-A1- 1 617 051
- EP-A1- 1 918 016
- EP-A1- 2 108 441
- EP-A1- 2 298 433
- WO-A1-2009/135588
- WO-A1-2010/051983
- WO-A1-2011/092517
- WO-A1-2011/092521
- WO-A1-2011/128026
- WO-A2-03/045547
- WO-A2-2006/093802
- WO-A2-2009/023202
- FR-A1- 2 773 144
- GB-A- 2 238 784
- JP-A- 2007 245 050
- US-A1- 2002 094 314
- US-A1- 2004 109 805
- US-A1- 2008 167 178
- US-A1- 2009 199 546
- US-A1- 2009 304 566

## Description

### Domaine technique de l'invention

La présente invention se rapporte au domaine de la catalyse pour la réduction des oxydes d'azote par l'ammoniac.

### Arrière-plan technologique

Depuis de nombreuses années, les constructeurs de véhicules automobiles à moteur thermique font beaucoup d'efforts pour réduire l'émission dans l'atmosphère de composés chimiques nuisibles à l'environnement produits par les moteurs thermiques lors de la combustion du carburant.

Parmi ces composés, on trouve les oxydes d'azote, principalement le monoxyde NO et le dioxyde NO₂ d'azote, désignés ensemble sous l'abréviation NOₓ.

Une technique connue pour éliminer les NOₓ consiste à réduire sélectivement ces composés. Cette technique est mise en oeuvre au moyen d'un dispositif catalytique dit SCR (« Selective Catalytic Réduction »). Cette technique consiste à ajouter un dispositif catalytique de réduction des NOₓ en amont ou en aval d'un filtre à particules dans le circuit d'échappement des gaz de combustion. Le dispositif catalytique comprend une composition catalytique spécifique et est utilisé avec de l'ammoniac à titre d'agent réducteur ou un précurseur de l'ammoniac (par exemple de l'urée).

On connait des compositions catalytiques pour la réduction sélective des oxydes d'azote à base de fer ou de cuivre déposé sur une zéolithe, cependant sous des conditions hydrothermales difficiles telles que celle rencontrées dans les gaz d'échappement de moteur à combustion interne, l'efficacité de la réduction catalytique des oxydes d'azote de ces compositions catalytiques décline.

On connait du document WO2009099937 une composition catalytique comprenant du cuivre déposé sur une zéolithe silico-alumino-phosphate (SAPO-34). Cette composition catalytique présente une stabilité hydrothermale que jusqu'à 850°C.

De manière générale, l'efficacité de la réduction catalytique SCR n'est pas non plus satisfaisante à basse température.
Un filtre à particules, que l'on peut désignera aussi sous le sigle FAP, présente une structure formée d'un grand nombre de canaux fermés alternativement pour que les gaz d'échappement chargés de particules soient obligés de passer à travers les parois poreuses du corps en forme de nid d'abeille. Un tel filtre peut être en céramique, par exemple en cordiérite ou en carbure de silicium. Il peut aussi s'agir de tamis en toile métallique, en mousse céramique ou en matériaux fibreux.
On connait, par exemple du document EP1617051 un système SCR/FAP intégré pour lequel les parois du filtre à particules peuvent être imprégnées d'une composition catalytique SCR. Pour garantir la réduction voulue, il faut de temps en temps éliminer les particules de suies accumulées dans le filtre à particules. Cela se fait en général en brûlant les particules à une température élevée du filtre. Il s'agit de la régénération thermique du filtre. Dans le cas de cas d'un véhicule équipé d'un moteur diesel, cette régénération se fait de manière caractéristique par élévation de la température des gaz d'échappement. Les niveaux de température atteint dans le filtre dégradent l'efficacité de la réduction catalytique SCR.

Il est connu par le document WO2009/135588 (et le document US 2011/0056187 correspondant) que la stabilité thermique d'un zéolithe ferriérite échangée avec du fer (0.1 - 10% en poids et de préférence entre 1-8%) dans un procédé SCR est meilleure que celle d'un zéolithe « béta » échangée avec du fer, avec une phase de test dépassant 1000°C pour un zéolithe expérimental avec du fer à 3,5%.

WO 2010/051983 décrit un filtre à particules comprenant deux compositions catalytiques. Le catalyseur devant remplir la fonction SCR est déposé sur la surface des parois des canaux ouverts du côté de l'entrée des gaz. Le catalyseur d'oxydation est déposé sur la surface des parois des canaux ouverts du côté de la sortie des gaz. Le catalyseur SCR peut contenir de préférence une zéolithe échangée au fer. La zéolithe est à sélectionner dans une liste comprenant le type ferriérite, qui n'est pas utilisée dans les exemples. Le rapport atomique AI/Si est de préférence supérieur à 10. La teneur en fer (taux d'échange) n'est pas définie.

Il existe donc un besoin pour mettre au point une composition catalytique présentant une plus grande fenêtre de fonctionnement, en étant notamment plus efficace à basse température et à haute température et apte à subir des pics thermiques sans dégradations des performances catalytiques. Ce besoin est particulièrement important dans le cas des moteurs Diesel ou essence à injection directe essence stratifié (mélange pauvre).

L'invention vise à résoudre un ou plusieurs de ces inconvénients.
L'invention porte ainsi sur une composition catalytique telle que définie par la revendication 1. En effet il est apparu que cette composition catalytique garde sa structure cristalline et donc ses propriétés catalytiques malgré des traitements hydrothermaux de l'ordre de 1000°C.

L'invention concerne aussi un système de traitement de gaz produits par combustion comprenant au moins un dispositif de traitement de gaz de l'invention et des moyens d'introduction dans les gaz de combustion d'un agent réducteur comprenant de l'ammoniac ou un précurseur de l'ammoniac.

L'invention concerne encore un moteur à combustion interne comprenant un système de traitement des gaz produits par combustion de l'invention.

De préférence, il s'agit d'un moteur de type diesel ou de type essence à injection directe. En effet, ces types de moteurs à combustion interne fonctionnent en mélange pauvre et sont générateurs d'oxydes d'azote, ces oxydes d'azote devant être traités.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique de la structure interne d'un filtre à particules.
- La figure 2 est un spectre de diffraction de rayons X (DRX) de la composition catalytique A, vieillie à 850°C pendant 5 heures. L'angle de diffraction est représenté en abscisses et l'intensité de diffraction est représentée en ordonnées.
- La figure 3 est un spectre de diffraction de rayons X (DRX) de la composition catalytique A, vieillie à 900°C pendant 5 heures. L'angle de diffraction est représenté en abscisses et l'intensité de diffraction est représentée en ordonnées.
- La figure 4 est un spectre de diffraction de rayons X (DRX) de la composition catalytique A, vieillie à 950°C pendant 5 heures. L'angle de diffraction est représenté en abscisses et l'intensité de diffraction est représentée en ordonnées.
- La figure 5 est un spectre de diffraction de rayons X (DRX) de la composition catalytique B, vieillie à 850°C pendant 5 heures. L'angle de diffraction est représenté en abscisses et l'intensité de diffraction est représentée en ordonnées.
- La figure 6 est un spectre de diffraction de rayons X (DRX) de la composition catalytique B, vieillie à 900°C pendant 5 heures. L'angle de diffraction est représenté en abscisses et l'intensité de diffraction est représentée en ordonnées.
- La figure 7 est un spectre de diffraction de rayons X (DRX) de la composition catalytique B, vieillie à 950°C pendant 5 heures. L'angle de diffraction est représenté en abscisses et l'intensité de diffraction est représentée en ordonnées.
- La figure 8 est un spectre de diffraction de rayons X (DRX) de la composition catalytique B, vieillie à 1000°C pendant 5 heures. L'angle de diffraction est représenté en abscisses et l'intensité de diffraction est représentée en ordonnées.
- La figure 9 est un spectre de diffraction de rayons X (DRX) de la composition catalytique C, non vieillie. L'angle de diffraction est représenté en abscisses et l'intensité de diffraction est représentée en ordonnées.
- La figure 10 est un spectre de diffraction de rayons X (DRX) de la composition catalytique C, vieillie à 850°C pendant 5 heures. L'angle de diffraction est représenté en abscisses et l'intensité de diffraction est représentée en ordonnées.
- La figure 11 est un spectre de diffraction de rayons X (DRX) de la composition catalytique C, vieillie à 900°C pendant 5 heures. L'angle de diffraction est représenté en abscisses et l'intensité de diffraction est représentée en ordonnées.
- La figure 12 est un spectre de diffraction de rayons X (DRX) de la composition catalytique C, vieillie à 950°C pendant 5 heures. L'angle de diffraction est représenté en abscisses et l'intensité de diffraction est représentée en ordonnées.
- La figure 13 est un spectre de diffraction de rayons X (DRX) de la composition catalytique C, vieillie à 1000°C pendant 5 heures. L'angle de diffraction est représenté en abscisses et l'intensité de diffraction est représentée en ordonnées.
- La figure 14 est un graphe présentant le taux de conversion des oxydes d'azote en fonction de la température de gaz, pour la composition catalytique A ayant subie un traitement hydrothermal à 850°C, 900°C et 950°C.
- La figure 15 est un graphe présentant le taux de conversion des oxydes d'azote en fonction de la température de gaz, pour la composition catalytique B ayant subie un traitement hydrothermal à 850°C, 900°C, 950°C et 1000°C.
- La figure 16 est un graphe présentant le taux de conversion des oxydes d'azote en fonction de la température de gaz, pour la composition catalytique C ayant subie un traitement hydrothermal à 850°C, 900°C, 950°C et 1000°C.

### Description détaillée

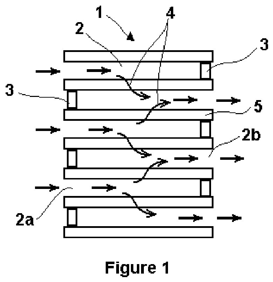

La figure 1 rappelle schématiquement la structure interne connue en soi d'un filtre 1 à particules. Un filtre à particules comprend généralement un substrat filtrant ou support céramique poreux comportant des canaux 2 parallèles. Ces derniers sont obstrués en alternance par des bouchons 3 céramiques de manière à forcer les gaz d'échappement dont le sens de circulation est illustré par les flèches 4 à entrer par des canaux 2a d'entrée, puis traverser les parois séparatrices 5 poreuses pour ressortir par des canaux 2b de sortie des gaz d'échappement.
Le substrat filtrant peut être choisi parmi des céramiques courantes donc économiques comme de préférence le carbure de silicium, l'alumine, le titanate d'aluminium, la cordiérite, la mullite. Ces céramiques présentent en outre une très bonne tenue thermique.
Le filtre à particules 1 comprend de plus une composition catalytique permettant la réduction catalytique sélective des oxydes d'azote. Un tel filtre à particules 1 permet de surmonter les inconvénients de l'état de la technique. Il permet dans une même structure interne non seulement de filtrer les particules de suie contenues dans les gaz d'échappement mais aussi de réduire plus efficacement les oxydes d'azote. On obtient donc un dispositif de traitement des gaz plus compact et plus économique puisque deux fonctions de traitement des gaz sont réunies sur un même support.
Conformément à l'invention, la composition catalytique est constituée de fer introduit dans une zéolite de type ferriérite de forme acide. Le fer est essentiellement introduit par échange des sites acides par le fer (deux sites acides étant remplacés par un atome de fer). La composition catalytique de l'invention est particulièrement adaptée à la de réduction sélective des oxydes d'azote, notamment par l'ammoniac.

Dans les proportions définies précédemment, la composition catalytique fournie par l'invention présente une stabilité hydrothermale améliorée relativement à l'art antérieur. On entend par stabilité hydrothermale le fait que la structure cristallographique de la composition catalytique, qui peut être caractérisée par diffraction X, n'est pas altérée après des vieillissements à haute température sous présence d'eau tels que ceux provoqués par des phases de régénération des filtres à particules, dans les conditions réelles sur véhicule. Il est apparu que la structure cristalline de la composition catalytique de l'invention est intacte après un vieillissement hydrothermal de 950°C sous flux d'air contenant de la vapeur d'eau et est toujours intacte après un vieillissement hydrothermal de 1000°C, ce qui permet de préserver l'efficacité de conversion des oxydes d'azote de la composition catalytique.

Par ailleurs, pour un rapport atomique Si/AI de la ferriérite compris entre 8 et 30, la composition catalytique est efficace à basse température avec un taux de conversion catalytique des oxydes d'azote supérieur à 40% dès 225°C, y compris après pour un vieillissement hydrothermal de 1000°C.

En outre, pour une proportion massique de fer dans la composition catalytique comprise entre 0,3% et 2%, les taux de conversion catalytique des oxydes d'azote, à une température de fonctionnement déterminée, sont relativement peu affectés par la température de vieillissement hydrothermal.

C'est cette meilleure tenue aux conditions de traitements hydrothermaux représentatives de conditions représentative rencontrées lors d'une phase de régénération qui rend possible l'intégration de la composition catalytique au substrat du filtre 1 à particules. On obtient ainsi un dispositif de traitement des gaz de combustion qui réunit en une unité un filtre à particules et un catalyseur de réduction sélective des oxydes d'azote. Cette réduction catalytique est déclenchée par l'apport d'un agent réducteur. L'agent réducteur est apporté dans les gaz de combustion par des moyens d'introduction adaptés, tel qu'un injecteur. Les moyens d'introduction de l'agent réducteur et le dispositif de dispositif de traitement des gaz de combustion forme un système de traitement des gaz.

La composition catalytique ci-dessus est particulièrement appropriée dans le cadre d'une réaction de réduction catalytique sélective des oxydes d'azote par de l'ammoniac. La réaction de réduction sélective des NOₓ s'effectue par réaction chimique, catalysée par la composition de l'invention, entre les oxydes d'azote, NOₓ, contenus dans les gaz de combustion et l'ammoniac.

L'agent réducteur apporté par les moyens d'introduction peut être de l'ammoniac en tant que tel ou encore un précurseur de l'ammoniac, c'est-à-dire une solution apte à produire, après réaction chimique de l'ammoniac gazeux. Un exemple de précurseur de l'ammoniac très connu est l'urée.
De manière connue les moyens d'introduction de l'agent réducteur peuvent être placés, relativement au sens de circulation des gaz de combustion, en amont du dispositif de traitement des gaz.
La composition catalytique de l'invention peut être déposée en surface sur au moins une partie des parois séparatrices 5 poreuses des canaux 2 de passage des gaz du filtre 1 à particules. La composition catalytique peut alors être déposée par un procédé d'enduction. Le substrat filtrant 1 étant poreux, au moins une partie de la composition catalytique peut aussi être déposée dans la porosité dudit substrat, autrement dit dans les parois séparatrices 5 poreuses.
Le système de traitement des gaz ci-dessus trouve particulièrement à s'appliquer dans le cadre du traitement des gaz produits par combustion d'un moteur à combustion interne.
Un tel système de traitement des gaz de combustion est particulièrement adapté à la réduction des oxydes d'azote produits par un moteur Diesel ou un moteur à essence à injection directe stratifié, c'est-à-dire pour lequel l'injection d'essence est réalisée durant la phase de compression moteur.
En prenant comme exemple, l'ammoniac comme agent réducteur, le fonctionnement est le suivant : les moyens d'introduction apportent dans les gaz de combustion l'ammoniac qui se mélange aux gaz de combustion en amont du dispositif de traitement des gaz. Les gaz de combustion comprenant l'ammoniac entre ensuite dans le dispositif de traitement des gaz. La réaction de réduction sélective des NOₓ s'effectue alors par réaction chimique entre les oxydes d'azote contenus dans les gaz de combustion et l'ammoniac, la réaction chimique étant catalysée par la composition catalytique de l'invention. En outre les gaz de combustion traversent le substrat filtrant qui en retient les particules de suies.

### EXEMPLES

### Exemple 1 : Composition catalytique A selon l'état de la technique.

Une composition catalytique A selon l'état de la technique a été synthétisé en suivant l'enseignement du document WO2009/099937 au nom de BASF.

La composition catalytique A séché à 90°C est de 2,75% de cuivre, Cu, sur une zéolithe silico-alumino-phosphate, dénommée SAPO 34.

La composition catalytique A est ensuite enduite sur une carotte de monolithe en cordiérite puis calcinée pendant 5h à 550°C pour former un dispositif catalytique ou catalyseur. La charge en composition catalytique A dans le dispositif catalytique neuf est de 126g/l de monolithe.

La phase active de la composition catalytique A séchée à 90°C est ensuite vieillie à 850°C pendant 5 h, puis à 900°C pendant 5 h et enfin à 950°C pendant 5 h.

Après vieillissement, la composition catalytique A Cu/SAPO 34 est caractérisée par diffraction des rayons X pour déterminer la structure cristallographique.

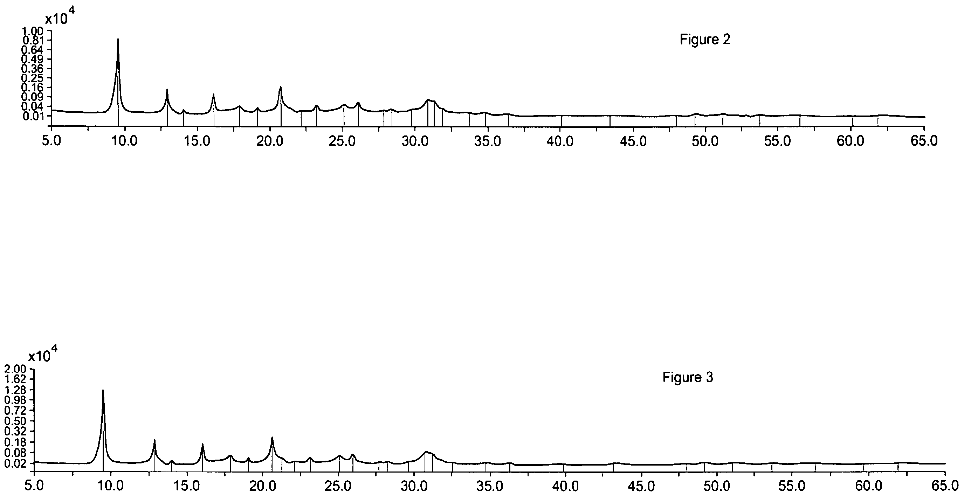

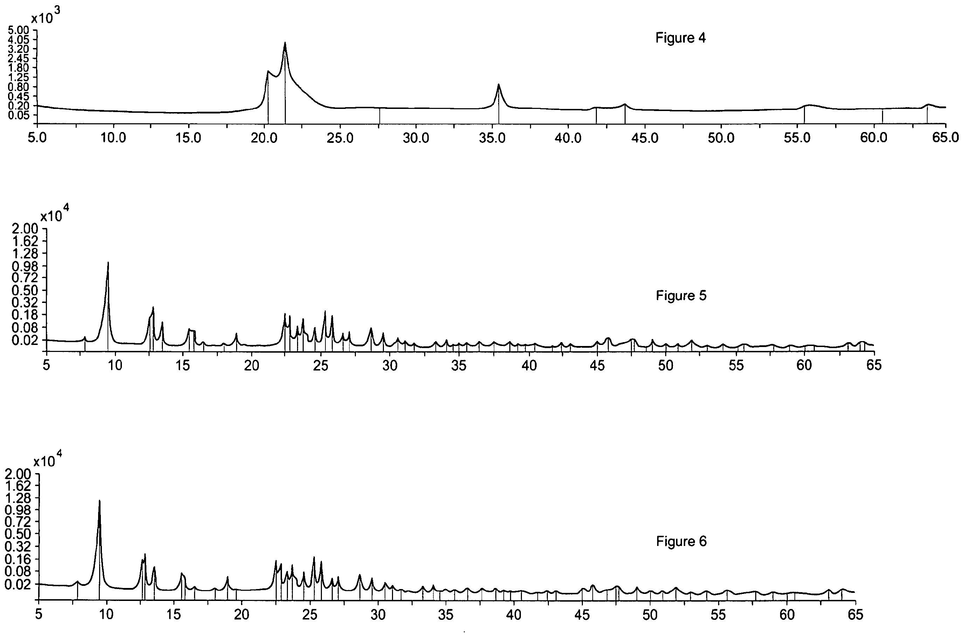

Les spectres de diffractions des échantillons de composition catalytique A vieillis à 850°C, 900°C et 950°C sont reportés respectivement aux figures 2, 3 et 4. Les spectres de diffraction des figures 2 et 3 sont sensiblement identiques et montrent que la structure cristallographique est stable pour des vieillissements à 850°C et 900°C, tandis que la figure 4 montre que la structure cristallographique du SAPO 34 est détruite après le vieillissement à 950°C.

### Exemple 2 : Composition catalytique B selon l'invention

La composition catalytique B est constituée de 0,67 % de Fer, introduit dans une zéolithe de type ferriérite sous forme initiale acide, dont le rapport Si/AI atomique est de 27,5. Une zéolithe ferriérite sous forme acide désigne de manière connue une zéolithe pour laquelle l'aluminium, sous forme d'ion Al⁻, est associé à de l'hydrogène sous forme d'ion H⁺.

La ferriérite est une zéolithe qui comporte deux réseaux de canaux dont les ouvertures de pores sont 4.3 Å x 5.5 Å et 3.4 Å x 4.8 Å.

On procède à l'échange de site acide de cette zéolithe par Fe₂⁺ avec une solution aqueuse de sulfate de fer FeSO₄7H₂O ; les conditions d'échange sont les suivantes :
50 g de zéolithe sont mis en suspension et sous agitation dans 150 cm³ d'une solution de sulfate de fer (à 1 mole/litre soit 278 g FeSO₄7H₂O/litre). La température est de 60 °C et le temps d'échange de 4 heures.

La zéolithe échangée Fe₂⁺ est filtrée sur un entonnoir filtrant puis lavé en percolation avec un litre d'eau déminéralisée dont la conductivité est inférieure à 10 µsiemens.

Le gâteau de filtre est séché à l'étuve à 100 °C ; la teneur en fer mesurée par ICP (pour Induced Coupled Plasma) est de 0,7 % en poids.

On procède ensuite au revêtement de cette zéolithe sur une carotte de substrat en nid d'abeille de grade 400 cpsi (400 canaux per square inch, autrement dit 62 canaux par cm²). La carotte à un diamètre 2, 54 cm et une hauteur de 5, 08 cm, soit un volume de 25 cm³.

Le liant utilisé est une alumine de type pseudobohémite; la teneur en liant exprimée en Al₂O₃ est de 20 % en poids. On procède à partir d'une barbotine dont la rhéologie est adaptée à des trempages et soufflages successifs, puis séchage à 100 °C et traitement sous air à 500 °C pendant 4 heures.

La teneur en matière active est de 158 g/l.

Le traitement de vieillissement se fait dans un four sous balayage d'un mélange d'air comprenant 10 % H₂O pendant 5 heures aux températures suivantes : 850°C, 900°C, 950°C et 1000°C. Un échantillon de la composition catalytique B en poudre subit également le même traitement pour analyse par diffraction X.

Ce traitement hydrothermal est appliqué pour représenter les vieillissements hydrothermaux que les compositions catalytiques subiront lors des régénérations des filtres à particules dans les conditions réelles sur véhicule.

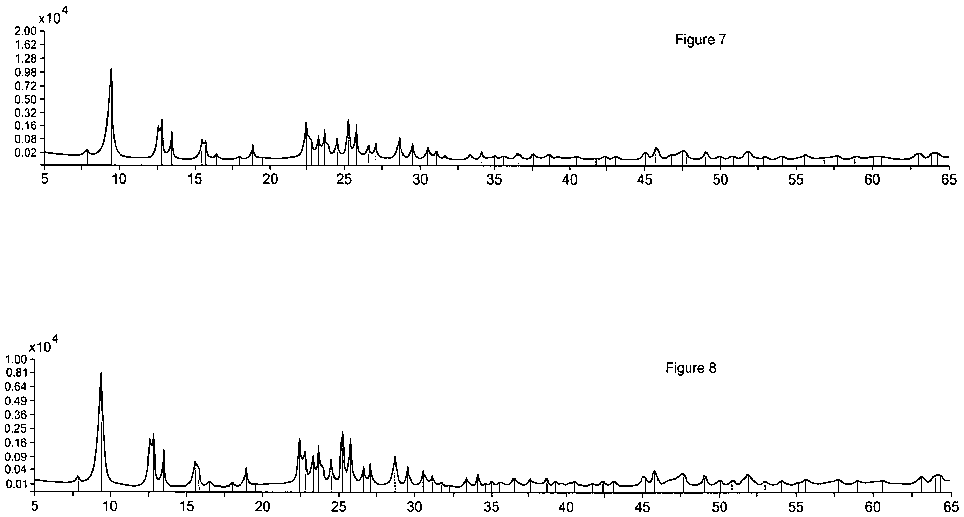

Les spectres de diffractions X des échantillons de composition catalytique B vieillis à 850°C, 900°C, 950°C et 1000°C sont reportés respectivement aux figures 5, 6, 7 et 8. On constate qu'après un traitement à 1000°C, le spectre de diffraction présenté en figure 8 est similaire à ceux des figures 5, 6 et 7, ce qui montre que la structure cristalline est toujours intacte.

### Exemple 3 : Composition catalytique C selon l'invention

La composition catalytique C est constituée de 0,7% de fer, introduit dans une zéolithe de type ferriérite forme initiale acide dont le rapport Si/AI atomique est de 8,8.

On procède à l'échange de sites acide de cette zéolithe par Fe₂⁺ avec une solution aqueuse de sulfate de fer FeSO₄7H₂O; les conditions d'échange sont les suivantes :
50 g de zéolithe sont mis en suspension et sous agitation dans 150 cm³ d'une solution de sulfate de fer (à 1 mole/litre soit 278 g FeSO₄7H₂O/litre). La température est de 60 °C et le temps d'échange de 4 heures.

La zéolithe échangée Fe₂⁺ est filtrée sur un entonnoir filtrant puis lavé en percolation avec un litre d'eau déminéralisée dont la conductivité est inférieure à 10 µsiemens.

Le gâteau de filtre est séché à l'étuve à 100 C ; la teneur en fer mesurée par ICP est de 0,7 % en poids.

On procède ensuite au revêtement de cette zéolithe sur une carotte de substrat en nid d'abeille de grade 400 cpsi (400 canaux per square inch, autrement dit 62 canaux par cm²). La carotte à un diamètre 2, 54 cm et une hauteur de 5, 08 cm, soit un volume de 25 cm³.

Le liant utilisé est une alumine de type pseudobohémite. La teneur en liant exprimée en Al₂O₃ est de 20 % en poids. On procède à partir d'une barbotine dont la rhéologie est adaptée à des trempages et soufflages successifs, puis séchage à 100 °C et traitement sous air à 500 °C pendant 4 heures.

La teneur en matière active est de 134 g/l.

Le traitement de vieillissement se fait dans un four sous balayage d'un mélange d'air comprenant 10 % H₂O pendant 5 heures aux températures suivantes : 850°C, 900°C, 950°C et 1000°C. Un échantillon de la composition catalytique B en poudre subit également le même traitement pour analyse par diffraction X.

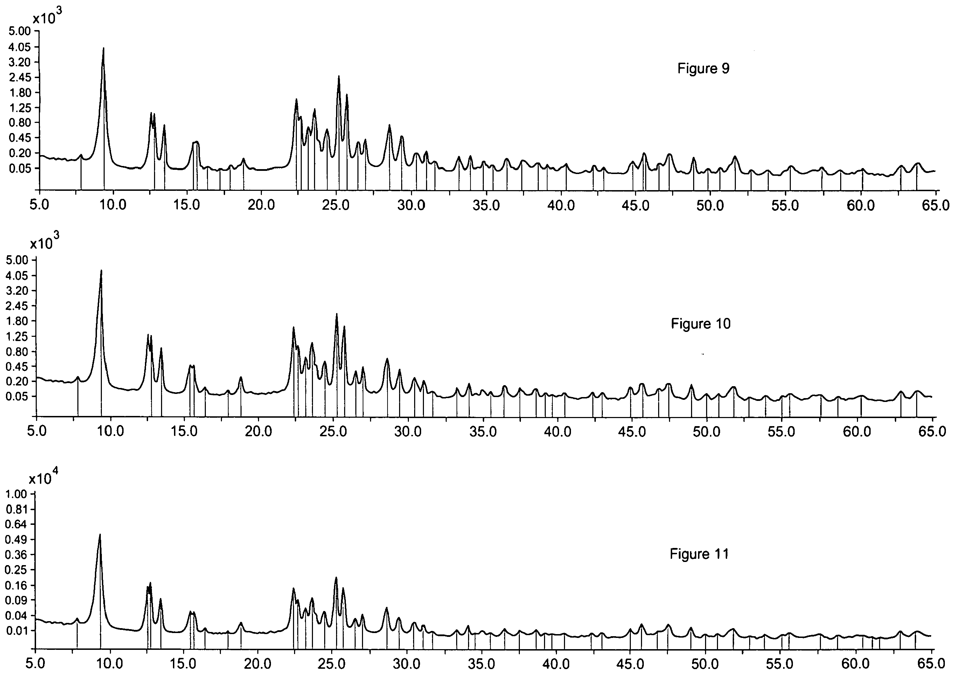

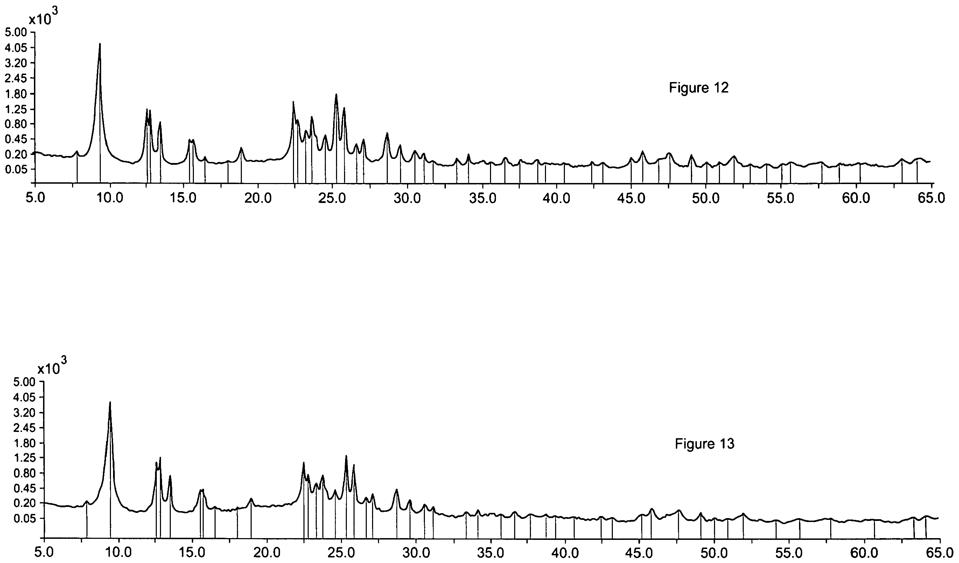

Les spectres de diffractions X des échantillons de composition catalytique C non vieilli, ainsi que vieillis à 850°C, 900°C, 950°C et 1000°C sont reportés respectivement aux figures 9, 10, 11, 12, et 13. On constate qu'après un traitement à 1000°C, le spectre de diffraction présenté en figure 13 est similaire à ceux des figures 9, 10, 11 et 12 ce qui montre que la structure cristalline est toujours intact.

### Evaluation des performances des compositions catalytique A, B et C décrits dans les exemples 1, 2, 3 en fonction du vieillissement hydrothermal.

Les différentes compositions catalytiques sont évaluées sur un banc de gaz synthétique dans les conditions suivantes :
• Composition du mélange réactionnel :

| | |
|---|---|
| NOₓ: | 400 ppm (50% N0 + 50% NO₂) |
| O₂: | 6 % |
| H₂O : | 7 % |
| NH₃/NOₓ : | 1 |

Complément à 100% par de l'azote
• Vitesse Volumétrique Horaire (VVH) sur la carotte de Filtre à particules : 30 000 h⁻¹
• Température : programmation de 200 à 550 °C avec une vitesse de montée en température de 5°C par minute.
• La composition des gaz en sortie du réacteur catalytique est mesurée par :
- Chimiluminescence pour NO et NO₂
- Infrarouge pour le N₂O
- Absorption spectroscopique pour NH3

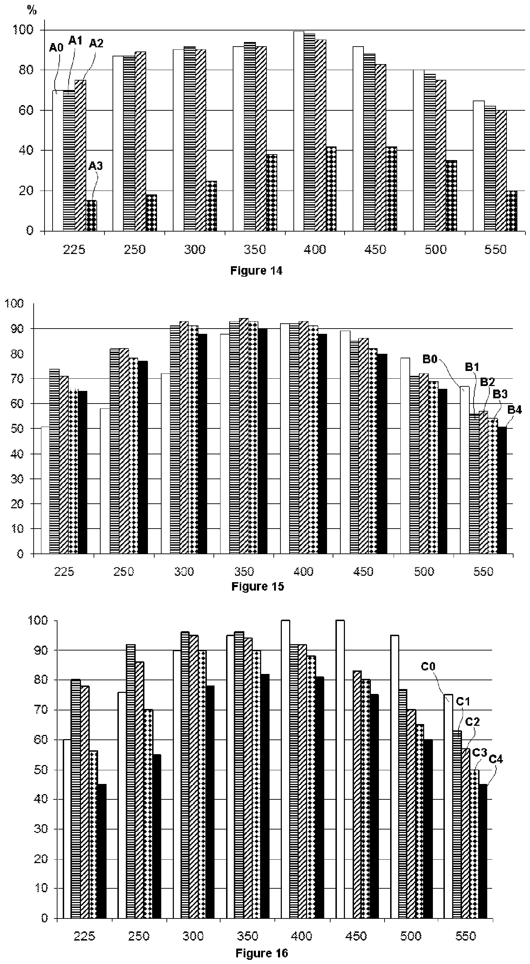

Les performances en conversion des NOₓ des compositions catalytique A, B et C sont reportées respectivement aux figures 14, 15 et 16.

Sur la figure 14, la référence A0 désigne la composition catalytique A sans vieillissement, la référence A1 désigne la composition catalytique A ayant subi un vieillissement à 850°C, la référence A2 désigne la composition catalytique A ayant subi un vieillissement à 900°C et la référence A3 désigne la composition catalytique A ayant subi un vieillissement à 950°C.

Sur la figure 15, la référence B0 désigne la composition catalytique B sans vieillissement, la référence B1 désigne la composition catalytique B ayant subi un vieillissement à 850°C, la référence B2 désigne la composition catalytique B ayant subi un vieillissement à 900°C, la référence B3 désigne la composition catalytique B ayant subi un vieillissement à 950°C et la référence B4 désigne la composition catalytique B ayant subi un vieillissement à 1000°C.

Sur la figure 16, la référence C0 désigne la composition catalytique C sans vieillissement, la référence C1 désigne la composition catalytique C ayant subi un vieillissement à 850°C, la référence C2 désigne la composition catalytique C ayant subi un vieillissement à 900°C, la référence C3 désigne la composition catalytique C ayant subi un vieillissement à 950°C et la référence C4 désigne la composition catalytique C ayant subi un vieillissement à 1000°C.

Comme le montre la figure 14, pour des températures de gaz testées comprises entre 225°C et 500°C, les compositions catalytiques A0, A1 et A2 présentent de bon taux de conversion des NOₓ, supérieurs à 60%. La composition catalytique A3, ayant subi un traitement hydrothermal de 950°C, a une efficacité en conversion de NOₓ relativement réduite qui peut s'expliquer par la destruction de la structure cristallographique du SAPO 34 après le vieillissement à 950°C comme le montre la figure 4.

En comparaison, les compositions catalytique B et C présentées aux figures 15 et 16 selon l'invention présentent une très bonne stabilité hydrothermale et une grande efficacité en réduction des NOₓ après un vieillissement à 950° C ainsi qu'après un vieillissement à 1000°C.

## Revendications

1. Filtre à particules (1) pour le traitement de gaz comprenant un substrat destiné à être traversé par lesdits gaz, présentant une structure interne adaptée pour former un filtre à particules contenues dans les gaz et comprenant une composition catalytique constituée d'une zéolithe de type ferriérite sous forme acide contenant du fer, ladite composition étant déposée sur au moins une partie des parois séparatrices poreuses des canaux de passages dudit substrat, la proportion massique de fer dans ladite zéolithe étant comprise entre 0,3% et 2% , et ladite zéolithe comprenant du silicium et de l'aluminium dans un rapport atomique Si/AI compris entre 8 et 30.

2. Système de traitement de gaz produits par combustion, **caractérisé en ce qu'**il comprend au moins un filtre à particules (1) selon l'une des revendications précédentes, et des moyens d'introduction dans les gaz de combustion d'un agent réducteur comprenant l'ammoniac ou un précurseur de l'ammoniac.

3. Moteur à combustion interne, **caractérisé en ce qu'**il comprend un système de traitement des gaz produits par combustion selon la revendication précédente.

## Patentansprüche

1. Partikelfilter (1) zur Behandlung von Gasen, das ein Substrat umfasst, das dazu bestimmt ist, von den Gasen durchquert zu werden, das eine interne Struktur aufweist, die angepasst ist, um ein Filter für Partikel, die in den Gasen enthalten sind, zu bilden, und eine katalytische Zusammensetzung umfasst, die aus einem Ferrierit-Zeolith-Typ in Form von Säure, die Eisen enthält, besteht, wobei die Zusammensetzung auf mindestens einem Teil der porigen Trennwände der Durchgangskanäle des Substrats abgeschieden ist, wobei der Masseanteil an Eisen in dem Zeolith zwischen 0,3 % und 2 % liegt, und der Zeolith Silizium und/oder Aluminium in einem atomaren Verhältnis Si/Al umfasst, dass zwischen 8 und 30 liegt.

2. Behandlungssystem von Gasen, die durch Verbrennung erzeugt werden, **dadurch gekennzeichnet, dass** es mindestens ein Partikelfilter (1) nach einem der vorstehenden Ansprüche umfasst, und Mittel zum Einführen eines Reduktionsmittels, das Ammoniak oder einen Vorläufer des Ammoniaks enthält, in die Verbrennungsgase umfasst.

3. Brennkraftmaschine, **dadurch gekennzeichnet, dass** sie ein System zum Behandeln der Gase, die durch Verbrennung erzeugt werden, nach dem vorstehenden Anspruch umfasst.

## Claims

1. A particle filter (1) for the treatment of gases including a substrate intended to be passed through by said gases, having an internal structure adapted to form a filter of particles contained in the gases and including a catalytic composition constituted by a ferrierite-type zeolite in acid form containing iron, said composition being deposited on at least a portion of the porous separating walls of the passage ducts of said substrate, the mass proportion of iron in said zeolite being comprised between 0.3 % and 2 %, and said zeolite including silicon and aluminium in an atomic ratio Si/Al comprised between 8 and 30.

2. A treatment system of gases produced by combustion, **characterized in that** it includes at least one particle filter (1) according to one of the preceding claims, and means for introduction into the combustion gases of a reducing agent including ammonia or an ammonia precursor.

3. An internal combustion engine, **characterized in that** it includes a treatment system of the gases produced by combustion according to the preceding claim.
